Europäisches Patentamt

European Patent Office

Office européen des brevets

(19)

(11) Publication number: **0 253 682**
**A2**

(12)

# EUROPEAN PATENT APPLICATION

(21) Application number: **87306380.4**

(22) Date of filing: **17.07.87**

(51) Int. Cl.⁴: **A 01 N 25/04**

(30) Priority: **17.07.86 JP 169254/86**

(43) Date of publication of application:
**20.01.88 Bulletin 88/03**

(84) Designated Contracting States:
**AT BE CH DE ES FR GB GR IT LI LU NL SE**

(71) Applicant: **SHIONOGI SEIYAKU KABUSHIKI KAISHA TRADING UNDER THE NAME OF SHIONOGI & CO. LTD.**
**12, 3-chome Dosho-machi Higashi-ku**
**Osaka (JP)**

(72) Inventor: **Wada, Takashi**
**2544 Kariya**
**Ako-shi Hyogo (JP)**

**Ogura, Yasuhiro**
**389-10 Hamaichi**
**Ako-shi Hyogo (JP)**

**Kume, Ryuichi**
**313-1 Shioya**
**Ako-shi Hyogo (JP)**

(74) Representative: **Bizley, Richard Edward et al**
**BOULT, WADE & TENNANT 27 Furnival Street**
**London EC4A 1PQ (GB)**

(54) Suspension-type agrochemical formulation.

(57) Suspension-type agrochemical formulations prepared by dispersing fine (e.g. 20 μm or less) particles of a hydrophobic solid agrochemical in an aqueous medium, wherein the dispersion is achieved with a surfactant and a water-immiscible solvent in which the agrochemical is highly soluble, the solvent being used in an amount smaller than that necessary to dissolve the agrochemical completely. Even agrochemicals having a melting point lower than 100°C can be formulated into the formulations.

**Description**

## SUSPENSION-TYPE AGROCHEMICAL FORMULATION

The present invention relates to novel suspension-type agrochemical formulations. More particularly, it relates to suspension-type agrochemical formulations prepared by dispersing fine particles of a hydrophobic solid chemical for agricultural use in water or in an aqueous medium, wherein a water-immiscible solvent in which said chemical is soluble at a high rate (hereinafter sometimes referred to as water-immiscible solvent) and a surfactant are used in the preparation of the dispersion.

In preparing suspension-type agrochemical formulations hitherto, it has been usual that hydrophobic solid agrochemicals are milled into fine particles by a dry- or wet-grinder and then dispersed in water or in another aqueous solvent in the presence of a surfactant together with thickening agents (JPN Patent Publication No 46-20519 and JPN Unexamined Patent Application No 49-133531). These prior techniques are very useful in the long-term dispersion of a solid agrochemical which has a relatively high melting point (higher than 100°C) and is very slightly soluble in water (below 50ppm at 20°C) but not convenient for one which has a melting point lower than 100°C (hereinafter sometimes referred to as agrochemical of lower melting point).

It is believed that crystal growth or aggregation is caused by continual reciprocal collision of the fine particles due to Van der Waal's forces. If the fine particles are once aggregated, they are sedimented like clay, and then it becomes difficult to disperse the aggregates.

On the other hand, it has been believed that it is of no use to use a solvent as stabilizer in which the agrochemical is highly soluble in preparing suspension-type agrochemical formulations, because using such a solvent accelerates crystal growth of the agrochemical. Therefore, as shown in the present invention, it is wholly surprising and unexpected that using a solvent in which the agrochemical is soluble can prevent the agrochemical from aggregation or crystal growth. Heretofore, no one has succeeded in dispersing an agrochemical of a lower melting point stably over a long period of time.

The present invention provides suspension-type agrochemical formulations prepared by dispersing fine particles of a hydrophobic solid agrochemical in an aqueous medium, wherein the dispersion is achieved with a surfactant and a water-immiscible solvent in which said agrochemical is highly soluble, the solvent being used in an amount smaller than that necessary to dissolve the agrochemical completely. The present invention can be applied to any solid agrochemicals which are very slightly soluble in water (hereinafter referred to as very slightly soluble agrochemicals) and can also be applied even to solid agrochemicals of lower melting points.

In another aspect there is provided a method for preparing a suspension-type agrochemical formulation, comprising (a) combining a suspension of fine particles of hydrophobic solid agrochemical in water or another aqueous medium, a surfactant and, in an amount smaller than that necessary to dissolve the agrochemical completely, a water immiscible solvent in which the agrochemical is highly soluble, or (b) combining a hydrophobic solid agrochemical and, in an amount smaller than that necessary to dissolve the agrochemical completely, a water immiscible solvent in which the agrochemical is highly soluble,, milling the agrochemical in the resultant mixture to fine particles and combining water or another aqueous medium and a surfactant with the agrochemical, the water or other aqueous medium and the surfactant each independently being combined with the agrochemical before and/or after it is milled.

As used herein, the term "agrochemical formulation" includes horticultural chemical formulations.

In the prior art, when an agrochemical having a lower melting point is dispersed, aggregation, coagulation, fusion, or crystal growth is observed during storage for long periods and is accompanied by precipitation of the solid. The resulting precipitates not only clog spray-nozzles but also result in the agrochemical being spread unevenly over the plants. The uneven spread of the agrochemical causes chemical injury or decrease in efficacy.

The present inventors have provided formulations in which such defects are eliminated or controlled and can be used as easily as other emulsfiable concentrates or oil solutions can. The present invention can be applied to all very slightly soluble agrochemicals and can also be applied to solid agrochemicals having melting points higher than 100°C (hereinafter referred to as agrochemicals of high melting point).

The aqueous suspension-type agrochemical formulations of the present invention may be prepared either by adding said water-immiscible solvent to a suspension of the milled hydrophobic solid agrochemical dispersed in water or another aqueous medium together with a surfactant to give hydrophilicity to the agrochemical or by milling the agrochemical into hydrophilic fine particles after the addition of said water-immiscible solvent. In an exemplary method the hydrophobic solid agrochemical is dispersed in water (or another aqueous medium) containing a surfactant, milled into fine particles, by a homogenizer or wet-grinder, and then a water-immiscible solvent is added thereto. It has been observed that the hydrophilic fine particles in thus prepared concentrates consist of a solid phase, liquid phase, and an intermediate phase thereof. These phases are interconvertible at ambient temperature: crystal growth is prevented by the convertibility.

In the present invention, hydrophobic solid agrochemicals means those which are very slightly soluble (lower than 5% solubility at 20 to 25°C) or practically insoluble in water, which may have a lower melting point or higher melting point (generally 30°C to 250°C). Typical agrochemicals are exemplified below together with their melting points and solubilities (at 20 to 25°C in water): herbicides such as, e.g., 2-methylthio-4-ethylamino-6-isopropylamino-S-triazine (mp 84-85°C, 185ppm), 2-chloro-2,6-diethyl-N-(methoxymethyl)acetanilide (mp 40-41°C, 240ppm), 1-(α,α-dimethylbenzyl)-3-methylphenylurea (mp 73°C, 277 ppm), 3-(3,4-dichlorophenyl)-1-methoxy-1-methylurea (mp 90-94°C, 75ppm), 3-(3,4-dichlorophenyl)-1, 1-dimethylurea (mp 158-159°C, 18ppm), 2,6-dichlorobenzonitrile (mp 145-146°C, 42ppm), 3,5-diiodo-4-octanoyloxybenzonitrile (mp 59-60°C, insoluble), α,α,α-trifluoro-2,6-dinitro-N,N-dipropyl-para-toluidine (mp 45-48°C, insoluble), N-butyl-N-ethyl-α,α,α-trifluoro-2,6-dinitro-N,N-dipropyl-para-toluidine (mp 45-48°C, insoluble), N-butyl-N-ethyl-α,α,α-trifluoro-2,6-dinitro-para- toluidine (mp 64-65°C, insoluble), and 3-(5-t-butyl-3-isoxazolyl)-1,1-dimethylurea (mp 106-115°C, 300 ppm); fungicides such as, e.g., diisopropyl-1,3-dithiolan-2-ylidene malonate (mp 50-54.5°C, 48ppm), and tetrachloroisophthalonitrile mp 250-251°C, 0.6ppm); insecticides such as dimethylethylsulfinyl isopropylthiophosphate (mp 36°C, insoluble), m-tolyl-N-methylcarbamate (mp 74-75°C, 0.26%), 3-diethoxyphosphorylthiomethyl-6-chlorobenzoxazolone (mp 48°C, 10ppm), and methyl isothiocyanate (mp 35-36°C, 0.76%), for example, and other agricultural biocides.

In milling hydrophobic solid agrochemicals into fine particles, a mixer or homogenizer, and if necessary, colloid mill, attrition mill, sand grinder, or the like may be employed. The average size of the hydrophilic fine particles is generally smaller than about 20µm, more preferably smaller than about 5µm, and most preferably smaller than about 1µm.

The water-immiscible solvents in which the hydrophobic agrochemical is highly soluble include hydrocarbons such as cyclohexane, benzene, toluene, xylene and ethylbenzene, for example; halogenated hydrocarbons such as dichloromethane, chloroform, carbon tetrachloride and chlorobenzene, for example; $C_6$-$C_{12}$ alkyl alcohols such as n-hexyl alcohol, n-octyl alcohol and n-decyl alcohol, for example; ethers such as propyl ether, n-butyl ether, methyl phenyl ether and ethyl phenyl ether for example; ketones such as acetophenone, cyclophenone, cyclohexanone and isophorone, for example; esters such as methyl acetate, ethyl acetate, methyl benzoate and ethyl benzoate, for example; fatty acids such as oleic acid, for example; and aromatic hydrocarbons having a nitrogen atom in a substituent group such as nitrobenzene and aniline, for example: from the listed solvents, one in which the agrochemical employed is highly soluble may be chosen.

The relative amount of water-immiscible solvent to hydrophobic solid agrochemical is not specifically limited because it varies with the combination, especially with the solubility of the agrochemical in he solvent. Inter alia, it should be noted that the solvent must be used in a smaller amount than that necessary to dissolve the agrochemical completely. Further, the amount of the solvent to be used varies with kinds of surfactants or other additives or the amount thereof. Generally speaking, the solvents may be employed at a rate of 20 to 200%, more preferably of 30 to 120%, by weight to the hydrophobic solid agrochemicals used. Aggregation or crystal growth is often observed if the solvent is used in a smaller amount than the foregoing minimum limit, and on the other hand, if it is used in a larger amount than the maximum limit, fusion is accelerated and, consequently, phase separation is sometimes observed in the concentrates.

The water-immiscible solvents may be added before or after the milling of the hydrophobic solid agrochemicals. The optimum composition may be designed according to the kinds of the agrochemicals and other additives or the concentrations thereof and to the desired qualities of the formulations.

Surfactants used in this invention may be anionic, cationic, nonionic or amphoteric. In practice, surfactants used as agricultural auxiliaries may be used for this purpose. For example, anionic surfactants include fatty acid salts or esters such as alkylnaphthalenesulfonate, dodecylbenzenesulfonate, dialkylsulfosuccinate and magnesium stearate, for example; polyoxyethylene phenylphenolphosphate, polyoxyethylene phenylphenolsulfate, polyoxyethylene phenylphenolsulfonate, naphthalenesulfonate formaldehyde condensate, ligninsulfonate and polyoxyalkylene block polymer sulfate, for example. Nonionic surfactants include polyoxyalkylene alkyl ether, polyoxyethylenesorbitanalkylate, sorbitanalkylate, polyoxyethylenestyrenated phenyl ther, polyoxyethylene fatty acid ether, polyoxyethylene fatty acid ester and polylxyalkylene block polymer, for example.

Surfactants may be usually employed in an amount of 0.1 to 20% by weight of the final formulation, more preferably at 0.5 to 10%, most preferably at 1 to 5%.

If desired, polymers such as carboxymethyl cellulose, polyvinyl alcohol, polyacrylic acid or a salt thereof, alginic acid salt, polyvinyl pyrrolidone, gum arabic, xanthan gum, gelatin, and the like; and inorganic materials such as white carbon, talc, bentonite, clay, and the like may be employed as thickening agents to prevent said particles from aggregating or precipitating. Further known depressers of freezing point or suspensibility-potentiating agents including diols such as ethylene glycol or propylene glycol, for example; triols such as glycerol for example; inorganic salts such as sulfate, carbonate or phosphate, for example; urea; and polyacrylic acid oligomer may be employed in this invention.

In order to increase stability of agrochemicals, if desired, the formulation may be adjusted to a preferred pH value with inorganic or organic acids or bases. For example, sodium hydroxide, potassium hydroxide, sodium phosphate, mono- di-, or tri-ethanolamine, or hydrochloric acid may be preferably employed.

The present invention is explained by the following examples and experiments in more detail, which examples and experiments are not intended to limit the scope of the invention.

EXAMPLE 1

Into 435g of 2.0% aqueous solution (70°C) of olyoxyethylenephenylphenolphosphate was dissolved 65g of 3,5-diiodo-4-octanoyloxybenzonitrile and the mixture was then cooled down to 25°C while being stirred with a T.K. autohomogenizer type MIII (made by Tokushu Kika Co., Ltd.). The mixture was milled for 10 minutes by a wet method using a Dinomill type KDL (made by Willy A. Bachofen AG Maschinefabrik) to give an aqueous suspension.

To 300g of the aqueous suspension were added 30g of dichloromethane, 4.4g of polyacrylic acid, 12.0g of polyacrylic acid oligomer, 44g of propylene glycol, and then the necessary amount of deionised water to make the whole 600g. The prepared suspension concentrate contains the active ingredient in an amount of 6%.

## EXAMPLE 2

To 300g of the aqueous suspension prepared in Example 1 were added 30g of acetophenone, 4.4g of polyacrylic acid, 12.0g of polyacrylic acid oligomer, 60g of propylene glycol, and then the necessary amount of deionised water to make the whole 600g. The prepared suspension concentrate contains 6% of the active ingredient.

## EXAMPLE 3

To 300g of the aqueous suspension prepared in Example 1 were added 30g of isophorone, 4.4g of polyacrylic acid, 12.0g of polyacrylic acid oligomer, 48g of propylene glycol, and then the necessary amount of deionised water to make the whole 600g. The prepared suspension concentrate contains 6% of the active ingredient.

## EXAMPLE 4

To 300g of the aqueous suspension prepared in Example 1 were added 30g of n-octyl alcohol, 4.4g of polyacrylic acid, 12.0g of polyacrylic acid oligomer, 75g of propylene glycol, and then the necessary amount of deionised water to make the whole 600g. The prepared suspension concentrate contains 6% of the active ingredient.

## EXAMPLE 5

In 346g of 3.5% aqueous solution (70°C) of polyoxyethylenephenylphenolphosphate was dissolved 154g of $\alpha,\alpha,\alpha$-trifluoro-2,6-dinitro-N,N-dipropyl-para-toluidine and the mixture was then cooled down to 25°C while being stirred with a T.K. autohomogenizer type MIII (made by Tokushu Kika Co., Ltd.,). The mixture was milled for 15 minutes by a wet method using a Dinomill type KDL (made by Willy A. Bachofen AG Maschinefabrik) to give an aqueous suspension.

To 300g of the aqueous suspension were added 84g of dichloromethane, 2.0g of polyacrylic acid, 33g of ethylene glycol, and then the necessary amount of deionised water to make the whole 450g. The prepared suspension concentrate contains the active ingredient in an amount of 20%.

## EXAMPLE 6

In 381g of 1.4% aqueous solution (70°C) of polyoxyethylenepolyarylalkyl ether was dissolved 119g of N-butyl-N-ethyl-$\alpha,\alpha,\alpha$-trifluoro-2,6-dinitroparatoluidine and the mixture was then cooled down to 25°C while being stirred with a T.K. autohomogenizer type MIII (made by Tokushu Kika Co., Ltd.). The mixture was milled for 15 minutes by a wet method using a Dinomill type KDL (made by Willy A. Bachofen AG Maschinefabrik) to give an aqueous uspension.

To 300g of the aqueous suspension were added 84g of isophorone, 2.0g of polyacrylic acid, 30g of ethylene glycol, and then the necessary amount of deionised water to make the whole 450g. The prepared suspension concentrate contains 15% of the active ingredient.

## EXAMPLE 7

In 346g of 3.5% aqueous solution (70°C) of polyoxyethylenephenylphenolphosphosphate was dissolved 154g of 3-diethoxyphosphorylthiomethyl-6-chlorobenzoxazorone and the mixture was then cooled down to 25°C while being stirred with a T.K. autohomogenizer type MIII (made by Tokushu Kika Co., Ltd.). The mixture was milled for 15 minutes by a wet method using a Dinomill type KDL (made by Willy A. Bachofen AG Maschinefabrik) to give an aqueous suspension.

To 300g of the aqueous suspension were added 63g of dichloromethane, 2.0g of polyacrylic acid, 30g of ethylene glycol, and then the necessary amount of deionised water to make the whole 450g. The prepared suspension concentrate contains 20% of the active ingredient.

## EXAMPLE 8

In 346g of 3.5% aqueous solution (70°C) of polyoxyethylenephenylphenolphosphate was dissolved 154g of 3-diethoxyphosphorylthiomethyl-6-chlorobenzoxazorone and the mixture was then cooled down to 25°C while being stirred with a T.K. autohomogenizer type MIII (made by Tokushu Kika Co., Ltd.). The mixture was milled for 15 minutes by a wet method using a Dinomill type KDL (made by Willy A. Bachofen AG Maschinefabrik) to give an aqueous suspension.

To 300g of the aqueous suspension were added 3g of benzene, 2.0g of polyacrylic acid, 30g of ethylene glycol, and then the necessary amount of deionised water to make the whole 450g. The prepared suspension concentrate contains 20% of the active ingredient.

## EXAMPLE 9

In 200g of 7.5% aqueous solution (50°C) of polyoxyethylenephenylphenolphosphate was dissolved 165g of methyl isothiocyanate. Toluene (60g), 1.3g of polyacrylic acid, 7.5g of polyacrylic acid oligomer, and 35g of ethylene glycol were added to the mixture and finally the necessary amount of deionised water to make the whole 500g was added thereto. The resulting mixture was cooled down to 25°C while being stirred with a T.K. autohomogenizer type MIII (made by Tokushu Kika Co., Ltd.) to give a suspension concentrate which contains the active ingredient in an amount of 30%.

## EXAMPLE 10

In 200g of 7.5% aqueous solution (50°C) of polyoxyethylenephenylphenolphosphate was dissolved 165g of methyl isothiocyanate. Dichloromethane (70g), 2.3g of polyacrylic acid, 75g of polyacrylic acid oligomer, 30g of ethylene glycol, and then the necessary amount of deionised water to make the whole 500g were added to the mixture. The resulting mixture was cooled down to 25°C while being stirred with a T.K. autohomogenizer type MIII (made by Tokushu Kika Co., Ltd.) to give a suspension concentrate which contains the active ingredient in an amount of 30%.

## EXAMPLE 11

In 200g of 7.5% aqueous solution (50°C) of polyoxyethylenephenylphenolphosphate was dissolved 165g of methyl isothiocyanate. Xylene (65g), 2.0g of olyacrylic acid, 10g of polyacrylic acid oligomer, 40g of ethylene glycol, and then the necessary amount of deionised water to make the whole 500g were added to the mixture. The resulting mixture was cooled down to 25°C while being stirred with a T.K. autohomogenizer type MIII (made by Tokushu Kika Co., Ltd.) to give a suspension concentrate which contains the active ingredient in an amount of 30%.

## EXAMPLE 12

In 150g of 10.0% aqueous solution (50°C) of polyoxyethylenephenylphenolphosphate was dissolved 220g of methyl isothiocyanate. Cyclohexanone (75g), 2.0g of polyacrylic acid, 15g of polyacrylic acid oligomer, 25g of ethylene glycol, and then the necessary amount of deionised water to make the whole 500g were added to the mixture. The resulting mixture was cooled down to 25°C while being stirred with a T.K. autohomogenizer type MIII (made by Tokushu Kika Co., Ltd.) to give a suspension concentrate which contains the active ingredient in a proportion of 40%.

For comparison with the formulations of the present invention, suspension concentrates of prior type were prepared in the following Reference Examples.

## REFERENCE EXAMPLE 1

To 300g of the aqueous suspension prepared in Example 1 were added 5.0g of polyacrylic acid, 12.0g of polyacrylic acid oligomer, 72g of propylene glycol, and then the necessary amount of deionised water to make the whole 600g. The prepared suspension concentrate contains 6% of the active ingredient.

## REFERENCE EXAMPLE 2

To 300g of the aqueous suspension prepared in Example 1 were added 2.0g of polyacrylic acid, 40g of ethylene glycol, and then the necessary amount of eionised water to make the whole 450g. The prepared suspension concentrate contains 15% of the active ingredient.

## Experiment

The novel suspension-type pesticide formulations prepared in the Examples above were tested as to their physical properties and stabilities at 40°C for one month, according to the method shown below.

(Test Method for Physical Properties)

(a) Mean particle size:

The suspension-type pesticide formulations were each diluted with distilled water up to 1/3000 to 1/000 concentration. The particle size was measured by a micron photosizer (Micron Photosizer SK-2000SR: made by Seishin Enterprise Co., Ltd.).

(2) Suspensibility:

1.0g (2.5g of formulations in Examples 9-12) of a suspension-type pesticide formulation was diluted with hard water (20°C, hardness 3) to make the whole 250 ml. Using the resultant preparations suspensibility was measured according to the Official Testing Methods for Physical Properties of Agricultural Chemicals (Agricultural Chemicals Inspection Center, Ministry of Agriculture, Forestry & Fishery).

(3) Viscosity:

The viscosity of each suspension-type pesticide formulation at 20°C was measured by a capillary viscometer (Top Kinematic Viscosimeter: made by Sogorikagaku Glass Works Co., Ltd.).

Table

| | | Physical Properties | | | | at 40°C for a Month | | |
|---|---|---|---|---|---|---|---|---|
| | | Appearance (Viscous Liquid) | Mean Particle Size | Suspensibility (%) | Viscosity (cps) | Appearance (Viscous Liquid) | Mean Particle Size | Suspensibility (%) |
| INVENTION | Example 1 | Whitish | 0.67 μm | 98.8 | 324.6 | No Change | 0.66 μm | 100.3 |
| | Example 2 | Whitish | 0.75 μm | 99.2 | 571.4 | No Change | 0.78 μm | 100.3 |
| | Example 3 | Whitish | 0.73 μm | 101.8 | 750.6 | No Change | 0.80 μm | 104.1 |
| | Example 4 | Whitish | 0.94 μm | 102.0 | 571.4 | No Change | 0.80 μm | 99.5 |
| | Example 5 | Reddish Orange | 1.05 μm | 101.6 | 254.9 | No Change | 1.16 μm | 102.4 |
| | Example 6 | Yellowish Orange | 1.18 μm | 95.1 | 719.4 | Separation * | 2.64 μm | 87.2 |
| | Example 7 | Whitish | 0.96 μm | 102.0 | 389.9 | No Change | 0.91 μm | 98.9 |
| | Example 8 | Whitish | 1.14 μm | 99.8 | 452.0 | No Change | 1.01 μm | 100.2 |
| | Example 9 | Yellowish Brown | 0.96 μm | 96.9 | 44.3 | Separation * | 0.99 μm | 93.7 |
| | Example 10 | Whitish | | 92.8 | 258.7 | No Change | | 100.9 |
| | Example 11 | Whitish | | 98.0 | 13.9 | No Change | | 100.3 |
| | Example 12 | Whitish | | 91.4 | 62.8 | No Change | | 100.0 |
| PRIOR ART | Ref. Example 1 | Whitish | 0.70 μm | 99.0 | 246.5 | Separation * | 15.10 μm | 56.5 |
| | Ref. Example 2 | Whitish | 0.91 μm | 98.9 | 244.5 | Separation | 21.60 μm | 41.4 |

The asterisk "*" shows that the formulation was easily re-suspended by several shakings.

## Conclusion

As can be seen from the foregoing Experimental data, significant aggregation or crystal growth was observed and also suspensibility was decreased to about 50% after one month at 40°C with the reference formulations which represent the prior art, whereas with the formulations of the present invention, no crystal growth or decrease in suspensibility was observed under the same conditions as the reference examples.

We have not only developed a method for stabilization of the foregoing agrochemical formulations, but also made it possible to formulate practically water-insoluble agrochemicals having melting points lower than 100°C, which have been hard to formulate into suspensions with water or with another aqueous solvent.

The present invention has also made possible the increase of efficacy and decrease of chemical injury in field use. Additionally, it provides other various advantages in practical aspects: for example, (1) low costs in preparing formulation because water can be used in place of both inorganic carriers and organic solvents which must be used as extending agents in preparing wet powders or emulsifiable concentrates, (2) safe spraying of the chemicals, and (3) prevention of environmental pollution.

Included in the invention is a method of controlling weeds, fungus or pests, comprising applying to the weeds, fungus, pests or their locus, a herbicidal, fungicidal or pesticidal formulation according to the invention, and the use as an agrochemical of an agrochemical formulation of the nvention. The invention also includes formulations prepared by dilution with an aqueous medium (especially water) of concentrate formulations of the invention and the use and preparation of such concentrates.

## Claims

1. A suspension-type agrochemical formulation prepared by dispersing fine particles of a hydrophobic solid agrochemical in an aqueous medium, wherein the dispersion is achieved with a surfactant and, in an amount smaller than that necessary to dissolve the agrochemical completely, a water-immiscible solvent in which said agrochemical is highly soluble.

2. A suspension-type agrochemical formulation as claimed in claim 1, wherein the hydrophobic solid agrochemical has a melting point lower than 100°C.

3. A suspension-type agrochemical formulation as claimed in claim 1, wherein the agrochemical is 3,5-diiodo-4-octanoyloxybenzonitrile, $\alpha,\alpha,\alpha$-trifluoro-2,6-dinitro-N,N-dipropyl-paratolu idine,N-butyl-N-e-thyl-$\alpha,\alpha,\alpha$-trifluoro-2,6-dinitro-paratoluidine, 3-diethoxyphosphorylthiomethyl-6-chlorobenzoxazolone or methyl isothiocyanate.

4. A suspension-type agrochemical formulation as claimed in any one of the preceding claims, wherein the water-immiscible solvent is employed in an amount of 20 to 200% by weight, more preferably of 30 to 120% by weight, based on the amount of the agrochemical.

5. A suspension-type agrochemical formulation as claimed in any one of the preceding claims, wherein the water-immiscible solvent is a hydrocarbon, halohydrocarbon, aromatic hydrocarbon having a nitrogen atom, $C_6$-$C_{12}$ alkanol, ether, ketone, ester, or fatty acid.

6. A suspension-type agrochemical formulation as claimed in claim 5, wherein the water-immiscible solvent is dichloromethane, acetophenone, isophorone, n-octyl alcohol, benzene, toluene, or xylene.

7. A suspension-type agrochemical formulation comprising fine particles of a hydrophobic solid agrochemical dispersed in an aqueous medium, the aqueous medium further containing a surfactant and, in an amount smaller than that necessary to dissolve the agrochemical completely, a water immiscible solvent in which the agrochemical is highly soluble and optionally a thickening agent, the agrochemical preferably being a herbicide, a fungicide or an insecticide.

8. A method for preparing a suspension-type agrochemical formulation, comprising (a) combining a suspension of fine particles of hydrophobic solid agrochemical in water or another aqueous medium, a surfactant and, in an amount smaller than that necessary to dissolve the agrochemical completely, a water immiscible solvent in which the agrochemical is ighly soluble, or (b) combining a hydrophobic solid agrochemical and, in an amount smaller than that necessary to dissolve the agrochemical completely, a water immiscible solvent in which the agrochemical is highly soluble, milling the agrochemical in the resultant mixture to fine particles and combining water or another aqueous medium and a surfactant with the agrochemical, the water or other aqueous medium and the surfactant each independently being combined with the agrochemical before and/or after it is milled, method (a) or (b) optionally further comprising diluting the initially obtained formulation.

9. A method as claimed in claim 8, wherein the agrochemical is dispersed in water or another aqueous medium containing the surfactant, milled into fine particles and then combined with the water immiscible solvent.

10. (a) A method of controlling weeds, fungus or pests, comprising applying to the weeds, fungus, pests or their locus a herbicidal, fungicidal or pesticidal agrochemical formulation, respectively, as defined in any one of claims 1 to 7 (including applying thereto a herbicidal, fungicidal or pesticidal formulation prepared by dilution of a concentrate formulation as defined in any one of claims 1 to 7);

(b) the use as an agrochemical of a agrochemical formulation as defined in any one of claims 1 to 7 (including a formulation prepared by dilution of a concentrate formulation as defined in any one of claims 1

to 7).

CLAIMS FOR THE FOLLOWING CONTRACTING STATES: AUSTRIA AND SPAIN

1. A method for preparing a suspension-type agrochemical formulation, comprising (a) combining a suspension of fine particles of hydrophobic solid agrochemical in water or another aqueous medium, a surfactant and, in an amount smaller than that necessary to dissolve the agrochemical completely, a water immiscible solvent in which the agrochemical is highly soluble, or (b) combining a hydrophobic solid agrochemical and, in an amount smaller than that necessary to dissolve the agrochemical completely, a water immiscible solvent in which the agrochemical is highly soluble, milling the agrochemical in the resultant mixture to fine particles and combining water or another aqueous medium and a surfactant with the agrochemical, the water or other aqueous medium and the surfactant each independently being combined with the agrochemical before and/or after it is milled, method (a) or (b) optionally further comprising diluting the initially obtained formulation.

2. A method as claimed in claim 1, wherein the agrochemical is dispersed in water or another aqueous medium containing the surfactant, milled into fine particles and then combined with the water immiscible solvent.

3. A method as claimed in any one of the preceding claims wherein the hydrophobic solid agrochemical has a melting point lower than 100°C.

4. A method as claimed in any one of the preceding claims wherein the agrochemical is 3,5-diiodo-4-octanoyloxybenzonitrile, $\alpha,\alpha,\alpha$-trifluoro-2,6-dinitro-N,N-dipropyl-paratoluidine, N-butyl-N-ethyl-$\alpha,\alpha,\alpha$-trifluoro-2,6-dinitro-paratoluidine, 3-diethoxyphosphorylthiomethyl-6-chlorobenzoxazolone or methyl isothiocyanate.

5. A method as claimed in any one of the preceding claims wherein the water-immiscible solvent is employed in an amount of 20 to 200% by weight, more preferably of 30 to 120% by weight, based on the amount of the agrochemical.

6. A method as claimed in any one of the preceding claims wherein the water-immiscible solvent is a hydrocarbon, halohydrocarbon, aromatic hydrocarbon having a nitrogen atom, $C_6$-$C_{12}$ alkanol, ether, ketone, ester, or fatty acid.

7. A method as claimed in claim 6 wherein the water-immiscible solvent is dichloromethane, acetophenone, isophorone, n-octyl alcohol, benzene, toluene, or xylene.

8. A method as claimed in any one of the preceding claims wherein the average size of the fine particles is less than 20 μm, preferably less than 5 μm.

9. A method of controlling weeds, fungus or pests, comprising applying to the weeds fungus, pests or their locus a herbicidal, fungicidal or pesticidal formulation which has been prepared by a method as defined in any one of claims 1 to 8 or which omprises fine particles of a hydrophobic solid agrochemical dispersed in an aqueous medium, the aqueous medium further containing a surfactant and, in an amount smaller than that necessary to dissolve the agrochemical completely, a water immiscible solvent in which the agrochemical is highly soluble and optionally a thickening agent.

10. The use as an agrochemical of an agrochemical formulation which has been prepared by a method as defined in any one of claims 1 to 8 or which comprises fine particles of a hydrophobic solid agrochemical dispersed in an aqueous medium, the aqueous medium further containing a surfactant and, in an amount smaller than that necessary to dissolve the agrochemical completely, a water immiscible solvent in which the agrochemical is highly soluble and optionally a thickening agent, the agrochemical preferably being a herbicide, a fungicide or an insecticide.